(19) Europäisches Patentamt
European Patent Office
Office européen des brevets

(11) Veröffentlichungsnummer : **0 347 441 B1**

(12) # EUROPÄISCHE PATENTSCHRIFT

(45) Veröffentlichungstag der Patentschrift :
03.04.91 Patentblatt 91/14

(21) Anmeldenummer : 88909723.4

(22) Anmeldetag : 17.11.88

(86) Internationale Anmeldenummer :
PCT/DE88/00714

(87) Internationale Veröffentlichungsnummer :
WO 89/05907 29.06.89 Gazette 89/14

(51) Int. Cl.⁵ : **F02D 41/22, F02D 11/10**

(54) VERFAHREN UND VORRICHTUNG ZUR ÜBERWACHUNG EINES ANTRIEBSMOTORSOLLWERTGEBERS.

(30) Priorität : 21.12.87 DE 3743308

(43) Veröffentlichungstag der Anmeldung :
27.12.89 Patentblatt 89/52

(45) Bekanntmachung des Hinweises auf die Patenterteilung :
03.04.91 Patentblatt 91/14

(84) Benannte Vertragsstaaten :
DE GB SE

(56) Entgegenhaltungen :
EP-A- 0 213 349
DE-A- 2 558 477
DE-A- 3 510 173
GB-A- 2 133 906

(73) Patentinhaber : ROBERT BOSCH GMBH
Postfach 10 60 50
W-7000 Stuttgart 10 (DE)

(72) Erfinder : GESELLE, Helmut
Grösseweg 66
W-7150 Backnang (DE)
Erfinder : BÜHREN, Harald
Arndtstra e 15
W-7580 Bühl (DE)

## Beschreibung

Die Erfindung betrifft ein Überwachungsverfahren bzw. eine Vorrichtung für Antriebsmotorsollwertgeber gemäß den washängigen Patentansprüchen 1 und 7.

Ein solches Überwachungsverfahren ist aus der DE-OS 34 30 077 bekannt, hier wird mit einem mechanischen Schalter festgestellt, ob sich das Gaspedal außerhalb der Ruhestellung befindet. Liegt nun ein Bremsbetätigungssignal vor und gleichzeitig befindet sich das Gaspedal außerhalb der Ruhestellung, so wird vermutet, daß das Gaspedal blockiert ist und daher wird dann die Motorleistung zurückgenommen. Eine weitere Möglichkeit wird in Kolberg, G. "Elektronische Motorsteuerung für Kraftfahrzeuge" in Motortechnische Zeitschrift, 4, 1985 beschrieben. Hier wird aus dem gleichzeitigen Vorhandensein eines hohen Pedalwertes und eines Bremssignales auf einen Störfall geschlossen und die Drosselklappe auf eine niedere Lastposition zugefahren. Jedoch kann bei niedrigen Außentemperaturen durch die zähe Bremsflüssigkeit das Bremssignal noch Sekunden anstehen, und deshalb das Anfahren unmöglich machen.

Der Erfindung liegt die Aufgabe zugrunde, bei einem Überwachungsfehler der eingangs genannten Art sowohl ein Nichterkennen von blockierenden Sollwertgebern zu vermeiden, als auch Fehlsteuerungen zu verhindern. Diese Aufgabe wird durch die im Anspruch 1 gekennzeichneten Merkmale gelöst.

### Vorteile der Erfindung

Das erfindungsgemäße Überwachungsverfahren bzw die Vorrichtung mit den Merkmalen des zweiten Teils des Patentanspruchs 1 bzw. 7 hat demgegenüber den Vorteil, auch die erste Ableitung nach der Zeit des Sollwertgebers zu verwerten und kann daher den Willen des Fahrers berücksichtigen, auch wenn im Hydrauliksystem des Bremskreises der Druckabfall noch nicht vollständig ist.

Durch die Unteransprüche sind weitere vorteilhafte Ausgestaltungen der erfindungsgemäßen Überwachung angegeben. Weiterhin werden auch andere Defekte, wie Leitungsbruch vom Sollwertgeber zur Regeleinrichtung sowie z.B. Bruch der Rückholfeder des Sollwertgebers etc. zuverlässig ermittelt.

### Zeichnung

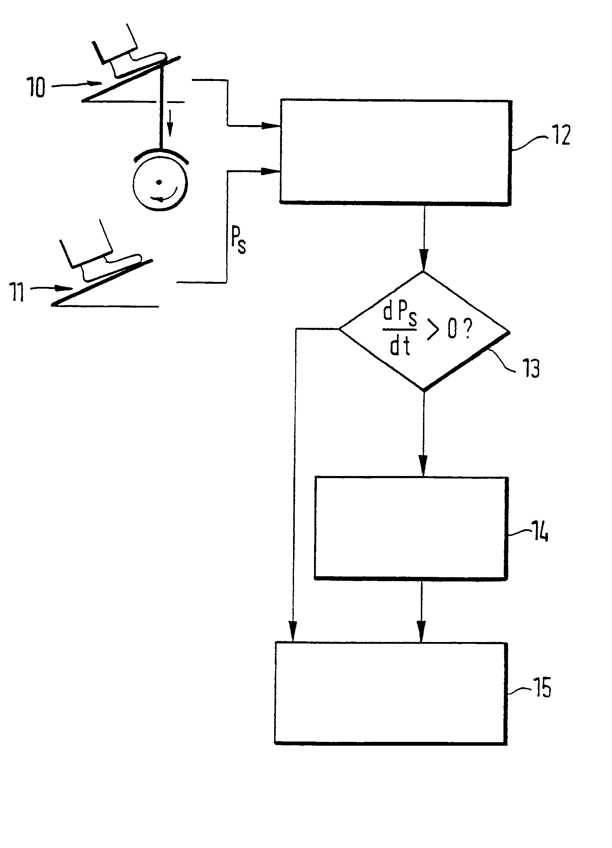

Ein Ausführungsbeispiel der Erfindung ist in der Zeichnung dargestellt und in der nachfolgenden Beschreibung näher erläutert. Die einzige Figur zeigt in Blocksymbolen den Funktionsablauf der Überwachungseinrichtung.

### Beschreibung des Ausführungsbeispieles

Ein Betätigungssignal der Bremse 10 und das Ausgangssignal des Motorsollwertgebers 11 werden der Überwachungseinrichtung 12 zugeführt. Im speziellen Fall des Ausführungsbeispieles wird das Bremsbetätigungssignal dem Stromkreis für die Bremsleuchte entnommen, während der Sollwertgeber ohnehin ein elektrisches Signal für die elektronische Motorsteuerung für Kraftfahrzeuge bereitstellt. Diese Überwachungseinrichtung 12 differenziert wenigstens das Motorsollwertsignal und macht eine Abfrage auf einem Schwellwert 13. Im bevorzugten Ausführungsbeispiel werden nur positive Ableitungen nach der Zeit berücksichtigt, d.h. nur wenn das Gaspedal weiter durchgetreten wird, spricht die Schwellwertabfrage an. Wird nun die Bremse 10 betätigt und die Schwellwertabfrage meldet keine Bewegung am Motorsollwertgeber 11, so spricht die Sicherheitsschaltung an und verfährt die Motorleistung über den Luftfluß im Ansaugrohr oder die Kraftstoffzumessung auf einen kleinen Wert 14. Damit ist der Prozeß beendet 15. Erfindungsgemäß spricht die Sicherheitsschaltung trotz Betätigungsmeldung der Bremse jedoch nicht an, wenn der fahrer das Gaspedal (erneut) niedertritt, was durch das differenzierte Sollwertsignal festgestellt werden kann. Dadurch kann der Fahrer auch mit kalter und daher zäher Bremsflüssigkeit sofort anfahren bzw. beschleunigen.

Der kleine Wert auf den die Motorleistung zurückgenommen wird im Falle des Ansprechens der Sicherheitsschaltung kann der Leerlauf sein. Für die Erfindung ist es unerheblich, den beschriebenen Ablauf auf elektrischem Wege zu realisieren, auch kann das Gaspedal durch eine andere zweckdienliche Einrichtung ersetzt sein mit der der Fahrer einen Sollwert vorgeben kann, z.B. ein Handgriff bei 2- und 3-Radkraftfahrzeugen.

### Ansprüche

1. Überwachungsverfahren für einen Motorleistungssollwertgeber (11) in einem kraftfahrzeug mit einer Bremsanlage (10) die ein Betätigungssignal für eine Überwachungseinrichtung bereitstellt, sowie einem Motorleistungsstellglied, wobei bei gleichzeitiger Betätigung von Bremse und Motorleistungssollwertgeber (11) die Antriebsleistung auf einen kleinen Wert zurückgenommen wird, dadurch gekennzeichnet, daß wenn die erste Ableitung des Motorleistungssollwertes nach der Zeit im Betrag größer als ein Schwellwert ist und gleichzeitig ein Bremsbetätigungssignal vorliegt, die Antriebsmotorleistung nicht zurückgenommen wird, bzw. zurückgenommen bleibt, sondern die Leistungssollwertvorgabe wie ein normaler Betriebsfall behandelt wird.

2. Verfahren nach Anspruch 1, dadurch gekennzeichnet, daß die Antriebsmotorleistung über den Luftfluß im Ansaugrohr oder die kraftstoffzumessung zurückgenommen wird.

3. Verfahren nach Anspruch 1 oder 2, dadurch gekennzeichnet daß der kleine Wert der Motorleistung vorzugsweise dem Leerlauf bzw. der unteren Teillast entspricht.

4. Verfahren nach Anspruch 1 bis 3, dadurch gekennzeichnet, daß das Signal beim Betätigen der Bremsen elektrisch gewonnen wird.

5. Verfahren nach Anspruch 4, dadurch gekennzeichnet, daß das Bremsbetätigungssignal aus dem Stromkreis für die Bremsleuchten gewonnen wird.

6. Verfahren nach Anspruch 1 bis 5, dadurch gekennzeichnet, daß nur wenn die erste Ableitung des Motorleistungssollwertes nach der Zeit einen positiven Wert hat, die Antriebsmotorleistung nicht auf einen kleinen Wert zurückgenommen wird.

7. Vorrichtung zur Durchführung des Verfahrens nach Anspruch 1 mit einem Motorleistungssollwertgeber (11) in einem Kraftfahrzeug mit einer Bremsanlage (10) die ein Betätigungssignal für eine Überwachungseinrichtung bereitstellt, sowie einem Motorleistungsstellglied, wobei bei gleichzeitiger Betätigung von Bremse und Motorleistungssollwertgeber (11) die Antriebsleistung auf einen kleinen Wert zurückgenommen wird, dadurch gekennzeichnet, daß Mittel vorhanden sind, die wenn die erste Ableitung des Motorleistungssollwertes nach der Zeit im Betrag größer als ein Schwellwert ist und gleichzeitig ein Bremsbetätigungssignal vorliegt, die Antriebsmotorleistung nicht zurücknehmen bzw. zurücknehmen lassen, sondern die Leistungssollwertvorgabe wie ein normaler Betriebsfall behandeln.

8. Vorrichtung nach Anspruch 7 zur Durchführung des Verfahrens nach Anspruch 1 bis 6, dadurch gekennzeichnet, daß der Motorleistungssollwertgeber ein über eine Mechanik vom Fahrer betätigtes Potentiometer ist, welches den Sollwert als Spannungshöhe abgibt.

9. Vorrichtung nach Anspruch 7 und 8 zur Durchführung des Verfahrens nach Anspruch 1 bis 6, dadurch gekennzeichnet, daß eine analog und/oder digital arbeitende Elektronik vorhanden ist, der der Sollwert und das Bremsbetätigungssignal zugeführt ist, die Fehlerfälle erkennt und gegebenenfalls die Motorleistung zurückführt bzw. gerade nicht zurückführt.

## Claims

1. Monitoring method for an engine power reference valve transmitter (11) in a motor vehicle having a braking system (10) which makes available an actuation signal for a monitoring device, as well as an engine power actuator, the drive power being reduced to a small value when the brake and the engine power reference value transmitter (11) are actuated at the same time, characterised in that, if the first differentiation of the engine power reference value in respect of time is greater in value than a threshold value and at the same time a brake actuation signal is present, the drive engine power is not reduced, or does not remain reduced, but rather the preset power reference value is treated as a normal operating case.

2. Method according to Claim 1, characterised in that the drive engine power is reduced via the airflow in the induction pipe or the fuel metering.

3. Method according to Claim 1 or 2, characterised in that the small value of the engine power preferably corresponds to the idling mode or to the lower partial load.

4. Method according to Claims 1 to 3, characterised in that the signal during the actuation of the brakes is acquired electrically.

5. Method according to Claim 4, characterised in that the brake actuation signal is acquired from the circuit for the brake lights.

6. Method according to Claims 1 to 5, characterised in that the drive engine power is not reduced to a small value only if the first differentiation of the engine power reference value in respect of time has a positive value.

7. Device for carrying out the method according to Claim 1 having an engine power reference value transmitter (11) in a motor vehicle having a braking system (10) which makes available an actuation signal for a monitoring device, as well as an engine power actuator, the drive power being reduced to a small value when brake and engine power reference value transmitter (11) are actuated at the same time, characterised in that means are present which do not reduce the drive engine power, or allow it to be reduced, but rather treat the preset power reference value as a normal operating case if the first differentiation of the engine power reference value in respect of time is greater in value than a threshold value and as the same time a brake actuation signal is present.

8. Device according to Claim 7 for carrying out the method according to Claims 1 to 6, characterised in that the engine power reference value transmitter is a potentiometer actuated by the driver via a mechanical means, which potentiometer emits the reference value as voltage level.

9. Device according to Claims 7 and 8 for carrying out the method according to Claims 1 to 6, characterized in that an analog and/or digital electronic system is present to which the reference value and the brake actuation signal are fed, which detects faults, and if appropriate, reduces or does not reduce the engine power.

## Revendications

1. Procédé de contrôle d'un capteur (11) de la valeur de consigne de la puissance d'un moteur dans un véhicule automobile, comportant une installation de freinage (10) qui fournit un signal de préparation pour un dispositif de contrôle, ainsi qu'avec un organe de réglage de la puissance du moteur, procédé dans lequel, lorsque les freins et le capteur (11) de la valeur de consigne de la puissance du moteur sont simultanément actionnés, la puissance d'entraînement est réduite à une faible valeur, procédé caractérisé en ce que lorsque la première dérivée de la valeur de consigne de la puissance du moteur en fonction du temps est supérieure en valeur à une valeur de seuil, et que simultanément un signal d'actionnement des freins est présent, la puissance du moteur d'entraînement n'est pas réduite, ou bien reste réduite, mais la prédéfinition de la valeur de consigne de la puissance est traitée comme un cas de fonctionnement normal.

2. Procédé selon la revendication 1, caractérisé en ce que la puissance du moteur d'entraînement est réduite par l'intermédiaire du débit d'air dans la tubulure d'aspiration ou bien du dosage du carburant.

3. Procédé selon la revendication 1 ou la revendication 2, caractérisé en ce que la faible valeur de la puissance du moteur correspond, de préférence, au ralenti ou bien à la zone inférieure de charges partielles.

4. Procédé selon l'une des revendications 1 à 3, caractérisé en ce que le signal, lors de l'actionnement des freins, est obtenu électriquement.

5. Procédé selon la revendication 4, caractérisé en ce que le signal d'actionnement des freins est obtenu à partir du circuit de courant des feux d'arrêt.

6. Procédé selon l'une des revendications 1 à 5, caractérisé en ce que c'est seulement lorsque la première dérivée de la valeur de consigne de la puissance du moteur en fonction du temps a une valeur positive que la puissance du moteur d'entraînement n'est pas réduite à une valeur faible.

7. Dispositif pour la mise en oeuvre du procédé selon la revendication 1, avec un capteur (11) de la valeur de consigne de la puissance d'un moteur dans un véhicule automobile, avec une installation de freinage (10) qui fournit un signal de préparation pour un dispositif de surveillance, ainsi qu'avec un organe de réglage de la puissance du moteur, tandis que lorsque les freins et le capteur (11) de la valeur de consigne de la puissance du moteur sont simultanément actionnés, la puissance d'entraînement est réduite à une valeur faible, dispositif caractérisé en ce qu'il est prévu des moyens qui, lorsque la première dérivée de la valeur de consigne de la puissance du moteur en fonction du temps est supérieure en valeur à une valeur de seuil, et que simultanément il y a un signal d'actionnement des freins, la puissance du moteur d'entraînement n'est pas réduite ou bien elle reste réduite mais la prédéfinition de la valeur de consigne de la puissance est traitée comme un cas de fonctionnement normal.

8. Dispositif selon la revendication 7 pour la mise en oeuvre du procédé selon l'une des revendications 1 à 6, caractérisé en ce que le capteur de la valeur de consigne de la puissance du moteur est un potentiomètre actionné par le conducteur par l'intermédiaire d'une mécanique et qui délivre la valeur de consigne sous la forme d'un niveau de tension.

9. Dispositif selon les revendications 7 et 8 pour la mise en oeuvre du procédé selon l'une des revendications 1 à 6, caractérisé en ce qu'il est prévu une électronique fonctionnant de façon analogique et/ou numérique, à laquelle est appliquée la valeur de consigne et le signal d'actionnement des freins, et qui reconnaît les cas où il y a erreur et réduit éventuellement la puissance du moteur, ou bien précisément ne la réduit pas.